# EUROPEAN PATENT APPLICATION

(11) **EP 4 715 693 A1**
(43) Date of publication of application: **25.03.2026**
(21) Application number: 24201079.1
(22) Date of filing: 18.09.2024
(51) Int. Cl.: G06Q 10/04, G06Q 50/06, H02J 3/00, H02J 13/00

(54) **BROKER MARKETPLACE FOR NEGOTIATING AND ASSIGNING DATA PROCESSING TASKS AMONG A PLURALITY OF PARTICIPATING DATA CENTERS**

(71) Applicant: Siemens Aktiengesellschaft, 80333 München (DE)
(72) Inventor: Bubnov, Yury, 195427 St. Petersburg (RU); Niessen, Stefan, 91056 Erlangen (DE); Viana Dias, Daniel, 2735-673 Cacém (PT)
(74) Representative: Siemens Patent Attorneys

(57) **Abstract**

It is the objective of the present invention to provide a method for negotiating and assigning data processing tasks among a plurality of participating data centers.

This objective is achieved according to the present invention a method for negotiating and assigning data processing tasks among a plurality of data centers; said method comprising the steps of:
a) providing a framework for a dynamic allocation of the data processing tasks and connecting a plurality of geographically distributed datacenters participating via computing nodes to said framework;
b) providing with the dynamic task allocation framework a task allocation instance,
c) said task allocation instance is receiving bids and/or offers coming from the participating datacenters wherein the bids and/or offers for data processing tasks reflect the share of real-time renewable energy supply and the remaining share of non-CO2-neutral energy supply as compared to a defined CO2-budget; and
d) said task allocation instance is allocating the data processing tasks in the dependency of the received bids and/or offers to preferred datacenters in the sense of applying one or more of the following allocation criteria:
i) at least a majority of the participating datacenters does not exceed the maximum share of non-renewable electricity allowable under the defined CC2-budget for the respective data-center.
ii) the data centers with the most advantageous share of renewable energy are loaded with data processing tasks first;
iii) the remaining data processing tasks are allocated to the remaining data centers in the priority of the decreasing share of renewable energy generation and/or supply.

Thus, the datacenters participating via the computing nodes can achieve significant energy cost savings by offloading some or all of their excess workload during periods of high energy prices and leveraging surplus renewable energy supply at distant locations. Additionally, the computing nodes can maximize their self-consumption of renewable energy, thereby reducing reliance on external energy sources, promoting sustainability and observing the existing political directives.

## Description

The present invention relates to a method for negotiating and assigning data processing tasks among a plurality of data centers.

The growing number of internet users, data traffic and data servers together with the exponential growth of crypto industry and artificial intelligence applications leads to the growth of the energy consumption of data centers and data transmission networks, and their respective carbon emissions.

The EU Energy Efficiency Directive EED III sets the following thresholds for the energy mix of data centers in the European Union:

| | |
|---|---|
| 2024 | Share of regenerative energy mandatory by >50% |
| 2027 | Share of regenerative energy mandatory by 100% |

According to the "2023 Best Practice Guidelines for the EU Code of Conduct on Data Centre Energy Efficiency" one of the most valued measures is "Sustainable energy usage" (#3.2.8): "Consider the proportion of energy used by the data center that comes from renewable / sustainable sources. Recording and reporting on the proportion of sustainable / renewable energy used against the overall energy consumption is expected to become an expected monitoring and reporting requirement in time."

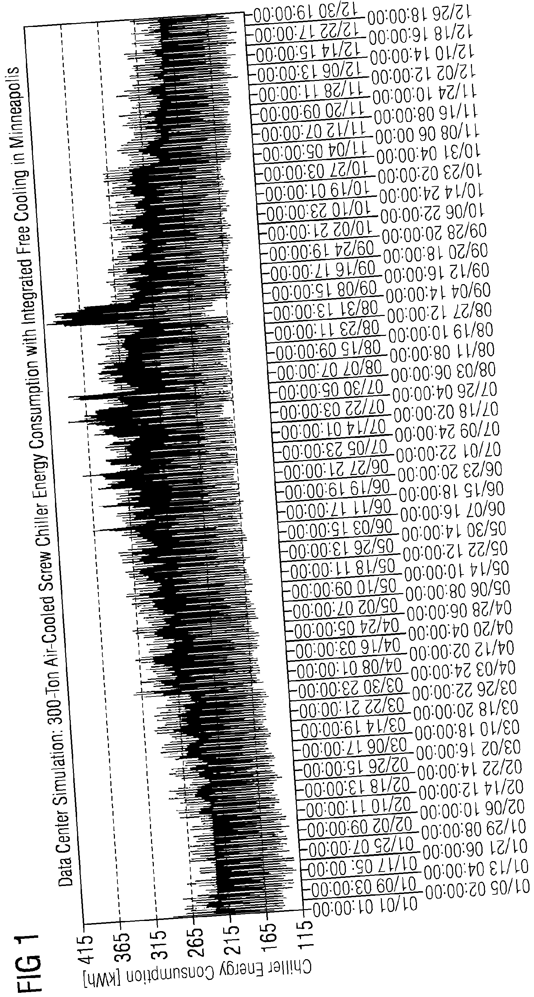

The typical load profile of a data center is substantially constant with many but only limited variations around the mean load as shown in Fig. 1. Here, the example represents the load profile of the energy consumption of a 300-Ton Air-Cooled Screw Chiller with Integrated Free Cooling for a data center in Minneapolis.

Since the generation of renewable energy sources is not constant and stable 7/24, there currently exist a certain mismatch on data center's energy load and supply in the case of integrated renewables that is demanded in order to become carbon dioxide neutral within the nearer future.

So far, this approach has been addressed with the purchase of either green electricity or green certificates. The flaw in this solution is that it does not establish any time-correlation between the actual generation of CO2-electrical energy and the simultaneous electricity consumption. This flaw can be tolerated by the regulation, as long as the renewable generation does not exceed the total energy demand.

However, when renewable generation exceeds the energy demand regularly, it becomes necessary to incentivize the electricity consumption that is synchronous with the renewable energy generation. In several countries and regions this threshold is increasingly reached e.g. in Ireland, Denmark, Germany.

The load profile can be aligned with renewable energy generation in two ways:
1) change of energy supply system (energy storage, on-site generation from fuels), and/or
2) change of the datacenter load.

The first option is already covered by many inventions and technologies, thus, the objective of the present invention will rather focus on the second option. The optimization of the datacenter load is currently done through time shifting, scheduling of data processing tasks or distributed computing frameworks. The time shifting involves adjusting the timing of the data center operations to match periods of high renewable energy availability. For instance, data centers can schedule resource-intensive tasks, such as data processing, backups, and maintenance during hours when the production of renewable energy exceeds these demands.

Advanced scheduling algorithms consider factors, such as workload characteristics, resource availability, and energy consumption profiles, to optimize the placement and execution timing of the data processing tasks. For example, scheduling algorithms may prioritize deploying tasks to data centers powered by renewable energy sources or dynamically adjust workload distribution based on real-time energy availability and demand fluctuations.

Distributed computing frameworks enable the parallel execution of data processing tasks across multiple computing nodes that are distributed geographically. These frameworks leverage distributed storage and processing capabilities to efficiently handle large-scale workloads. By deploying distributed computing frameworks across geographically dispersed data centers, the data center operators can leverage renewable energy sources that are available in different regions. The data processing tasks can be dynamically allocated to data centers based on energy availability, thereby enabling data centers to maximize the use of renewable energy resources while maintaining its performance and reliability.

Hypervisors (VMware ESXi, Microsoft Hyper-V, KVM, XenServer and Docker) have different mechanisms to improve energy efficiency considering different patterns of use (see https://www.sciencedirect.com/science/article/pii/S2210537917300963; Jiang Congfeng et al., Energy efficiency comparison of hypervisors, Sustainable Computing: Informatics and Systems, Volume 22, June 2019, Pages 311 to 312) .

Nonetheless, the present technology requires a high demand of exchange among a plurality of data centers present for example within one organization/company.

It is therefore the objective of the present invention to provide a method for negotiating and assigning data processing tasks among a plurality of participating data centers where the challenge of data processing task allocation can be solved more advantageously than currently known in the art.

This objective is achieved according to the present invention by the measures taken in accordance with the independent claims. Further advantageous embodiments are proposed by the dependent claims.

In particular, the present invention discloses a method for negotiating and assigning data processing tasks among a plurality of data centers; said method comprising the steps of:
a) providing a framework for a dynamic allocation of the data processing tasks and connecting a plurality of geographically distributed datacenters participating via computing nodes to said framework;
b) providing with the dynamic task allocation framework a task allocation instance,
c) said task allocation instance is receiving bids and/or offers coming from the participating datacenters wherein the bids and/or offers for data processing tasks reflect the share of real-time renewable energy supply and non-CO2-neutral energy supply as compared to a defined CO2-budget; and
d) said task allocation instance is allocating the data processing tasks in the dependency of the received bids and/or offers to preferred datacenters in the sense of applying one or more of the following allocation criteria:
   i) at least a majority of the participating datacenters does not exceed the maximum share of non-renewable electricity allowable under the defined CO2-budget for the respective datacenter.
   ii) the data centers with the most advantageous share of renewable energy are loaded with data processing tasks first;
   iii) the remaining data processing tasks are allocated to the remaining data centers in the priority of the decreasing share of renewable energy generation and/or supply.

Thus, the datacenters participating via the computing nodes can achieve significant energy cost savings by offloading some or all of their excess workload during periods of high energy prices and leveraging surplus renewable energy supply at distant locations. Additionally, the computing nodes can maximize their self-consumption of renewable energy, thereby reducing reliance on external energy sources, promoting sustainability and observing the existing political directives.

Even a sharper approach can be provided in terms of the application of a strict allocation criterion in order to achieve the objective that none of the participating datacenters exceeds the maximum share of non-renewable electricity allowable under the defined CO2-budget for the respective datacenter.

In a further preferred embodiment of the present invention, the bids and/or offers integrate real-time data and forecasts on renewable energy production, such as solar and wind power generation, from various geographic locations that are linked to the energy supply lines of the geographically distributed plurality of datacenters.

For a more detailed determination of the preferred datacenters, the task allocation instance may collect the following data for each of the participating data centers:
a) actual share of renewables in the electricity mix,
b) available computation capacity (CPU, GPU, memory, data storage),
c) actual queue of the computation tasks already allocated to the datacenter,
d) actual energy stored in local battery, if present,
e) the percentage of the depletion of the respective data center's share of non-renewable electricity, and
f) d) bids and/or offers for data processing tasks.

Additionally, said task allocation instance can further perform forecasts for the electricity mix of the respective data centers.

Preferred embodiments of the present invention will be described in more detail with reference to the attached drawings (like features have like reference numbers) which depict in:
- Figure 1: schematically an example of a load profile of a Data Center, here 300-Ton Air-Cooled Screw Energy Consumption with Integrated Free Cooling; and
- Figure 2: schematically a concept of a Market Trading platform to optimally allocate data computation tasks.

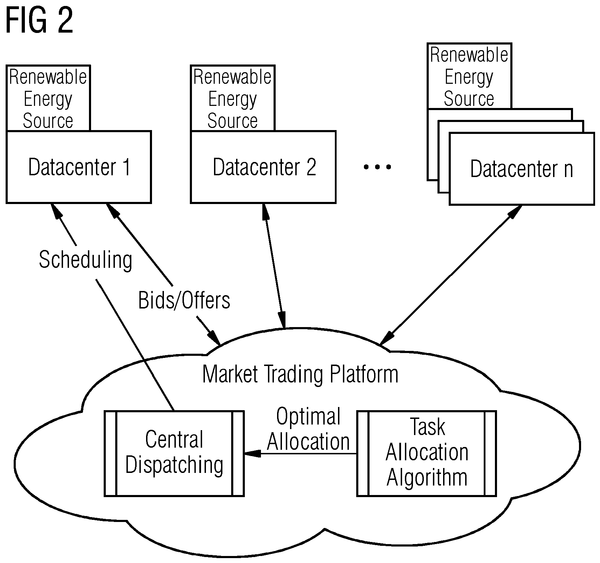

The present invention discloses a method for negotiating and assigning data processing tasks among a plurality of participating data centers. The new solution introduces a dynamic task allocation framework for data centers, leveraging real-time renewable energy supply to optimize workload distribution across geographically distributed computing nodes. At the core of this solution lies a market mechanism which can operate in both peer-to-peer and market matching function, facilitating the trading of energy between participating computing nodes (see Fig.2) in terms of bids/offers for data processing tasks to be executed at datacenters having an advantageous energy supply mix (share of renewable energy possibly up to 100%).

The present method integrates real-time data and forecasts on renewable energy production, such as solar and wind power generation, from various geographic locations. This information serves as the basis for optimizing task allocation across data centers.

A market trading platform facilitates the a) dispatching or b) trading of processing units between computing nodes. While a) dispatching, is simpler to implement, b) trading of processing units has the advantage, that it can also include data centers that do not belong to the same company or association.

### a) Dispatching

A central dispatching function collects the following data for each of the participating data centers: actual share of renewables in the electricity mix, available computation capacity (CPU, GPU, memory, data storage), actual queue of the computation tasks already allocated to the datacenter, the percentage of the depletion of the respective data center's share of non-renewable electricity. It also collects the requests for processing and may perform forecasts for the electricity mix of the respective data centers.

Based on this data, the central dispatching function permanently solves the following optimization problem:
The task allocation algorithm is allocating the data processing tasks in the dependency of the received bids and/or offers to the respective datacenters, thereby applying one or more of the following allocation criteria:
i) none of the participating datacenters exceeds the maximum share of non-renewable electricity allowable under the defined CO2-budget;
ii) the data centers with the most advantageous share of renewable energy are loaded with data processing tasks first;
iii) the remaining data processing tasks are allocated to the remaining data centers in the priority of the decreasing share of renewable energy generation and/or supply.

### b) Trading of processing units

This platform enables nodes to buy and sell computing capacity, allowing computing nodes with low share of renewable electricity in the supply mix to offload data processing tasks and computing nodes with high share of renewable electricity in the supply mix to profit from their surplus energy supply. Using advanced forecasting algorithms and market mechanisms, the solution dynamically allocates execution tasks to computing nodes based on their available renewable energy supply.

If the allocation is done via a market trading mechanism, each computing node has to determine a price for computing power. This price can be expressed in terms of money unit per floating point operation. Each computing node that is obliged to comply with the regulation mentioned in the introduction, is required to limit its CO2-emissions to an annual maximum. The nodes can use the bid prices on the market to achieve the annual CO2-emission target. The determination of the adequate price level can be done based on a forecast of the annual share of renewables in the electricity mix of the individual node.

By engaging in either a peer-to-peer market or via a market matching function, computing nodes can substantially reduce energy costs by transferring some or all of their excess workload during times of high energy prices and taking advantage of surplus renewable energy available at remote locations. Additionally, the computing nodes can maximize their self-consumption of renewable energy, thereby reducing reliance on external energy sources and promoting sustainability.

The method according to the present invention optimizes the performance of the data computing tasks and increases the reliability by considering factors such as task deadlines, computational requirements, and network latency. Data computing tasks are allocated to the computing nodes based on their computational capabilities and proximity to end-users, ensuring efficient and responsive service delivery, too.

As shown in Fig. 2, the concept of the Market Trading platform substantially provides a tool to optimally allocate data computation tasks under the prerequisite of datacenters that receive real-time energy production data from their integrated renewable energy sources. Consequently, these datacenters submit bids/offers for energy consumption based on their capacities. The platform comprises a task allocation algorithm that selects which data computing task should be executed on each of the participating datacenters. A data computing task scheduler then handles the communication of these assigned tasks to the datacenters.

Both the central dispatching function and the marketplace can be equipped with logging function that allow the data centers to testify their actual CO2-emissions that can be achieved due to the dynamic task distribution between data centers based on their energy budget and available computation resources.

The advantages achieved with the present solution lie, for example, in the fact that it is not necessary to use energy storage at a distinct datacenter, thus saving both investment costs and energy thereby keeping in mind that any energy storage comes with a certain portion of energy losses. Further, the algorithm of an optimal task allocation can also be extended to achieve other goals, to support for example demand response cases etc.

## Claims

1. A method for negotiating and assigning data processing tasks among a plurality of data centers; said method comprising the steps of:
a) providing a framework for a dynamic allocation of the data processing tasks and connecting a plurality of geographically distributed datacenters participating via computing nodes to said framework;
b) providing with the dynamic task allocation framework a task allocation instance,
c) said task allocation instance is receiving bids and/or offers coming from the participating datacenters wherein the bids and/or offers for data processing tasks reflect the share of real-time renewable energy supply and the remaining share of non-CO2-neutral energy supply as compared to a defined CO2-budget; and
d) said task allocation instance is allocating the data processing tasks in the dependency of the received bids and/or offers to preferred datacenters in the sense of applying one or more of the following allocation criteria:
i) at least a majority of the participating datacenters does not exceed the maximum share of non-renewable electricity allowable under the defined CO2-budget for the respective datacenter.
ii) the data centers with the most advantageous share of renewable energy are loaded with data processing tasks first;
iii) the remaining data processing tasks are allocated to the remaining data centers in the priority of the decreasing share of renewable energy generation and/or supply.

2. The method according to claim 1, wherein a strict allocation criterion is applied to achieve the objective that none of the participating datacenters exceeds the maximum share of non-renewable electricity allowable under the defined CO2-budget for the respective datacenter.

3. The method according to claim 1 or 2, wherein
the bids and/or offers integrate real-time data and forecasts on renewable energy production, such as solar and wind power generation, from various geographic locations that are linked to the energy supply lines of the geographically distributed plurality of datacenters.

4. The method according to any of the preceding claims, wherein said task allocation instance is collecting the following data for each of the participating data centers:
a) actual share of renewables in the electricity mix,
b) available computation capacity (CPU, GPU, memory, data storage),
c) actual queue of the computation tasks already allocated to the datacenter,
d) actual energy stored in local battery, if presented,
e) the percentage of the depletion of the respective data center's share of non-renewable electricity, and
f) bids and/or offers for data processing tasks.

5. The method according to claim 4, wherein said task allocation algorithm is performing forecasts for the electricity mix of the respective data centers.
